(19) Europäisches Patentamt / European Patent Office / Office européen des brevets

(11) **EP 2 662 637 B1**

(12) **EUROPEAN PATENT SPECIFICATION**

(45) Date of publication and mention
of the grant of the patent:
**06.03.2019   Bulletin 2019/10**

(51) Int Cl.:
*G01F 1/40* *(2006.01)*        *F24F 110/30* *(2018.01)*
*F24F 110/40* *(2018.01)*     *F24F 11/74* *(2018.01)*
*G01F 1/36* *(2006.01)*         *G01F 15/00* *(2006.01)*
*G05D 7/06* *(2006.01)*         *F24F 13/14* *(2006.01)*

(21) Application number: **13165894.0**

(22) Date of filing: **30.04.2013**

(54) **A gas flow regulator**

Gasdurchflussregler

Régulateur d'écoulement de gaz

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **08.05.2012   SE 1250466**

(43) Date of publication of application:
**13.11.2013   Bulletin 2013/46**

(73) Proprietor: **Odelros, Anders
810 40 Hedesunda (SE)**

(72) Inventor: **Odelros, Anders
810 40 Hedesunda (SE)**

(74) Representative: **Bjerkéns Patentbyrå KB (Gävle)
Box 1274
801 37 Gävle (SE)**

(56) References cited:
**EP-A2- 1 980 798          WO-A1-01/75374
DE-B3-102007 019 231    DE-U1- 20 217 571**

## Description

### TECHNICAL FIELD OF THE INVENTION AND BACKGROUND ART

The present invention relates to a gas flow regulator according to the preamble of appended claim 1. Such a gas flow regulator may be used for regulating any conceivable types of gas flows with respect to the flow rate thereof, but for illuminating the present invention regulation of gas flows in the form of air flows for ventilating purposes in buildings will hereinafter be described without restricting the invention to that application.

In plants for ventilating rooms of a building it is often preferred to have a varying air flow, which means that the air flow to a room, a premises or other part of a building is to be regulated in dependence of the actual need of such an air flow. This need may be influenced by a number of different parameters, such as daytime, carbon dioxide content, temperature or presence of people in the rooms in question. In common to such modern plants providing a varying air flow is a regulation of the air flow on the basis of minimum and maximum air flows while maintaining balance between supply air and exhaust air. Thus, the air flow, i.e. the air flow rate, is mostly not only to be regulated but also to be checked or measured for a centralised monitoring of different parts of the ventilation plant.

Gas flow regulator of the type defined in the introduction are for obtaining this aim advantageously arranged in channels of such ventilation plants, such as one regulator in each channel providing a room or the like with intake air and also in the exhaust air channels of the building.

It is known to arrange said throttle valve downstream a measurement flange locally restricting the cross-section area of a channel and measuring the air pressure upstream and downstream that flange for determining the air flow rate through the channel. The air flow rate will be proportional to the square root of said pressure difference. However, this pressure difference will in this case be proportional to the square of the air flow rate, so that a reasonable lowest air pressure difference for an accurate measurement of for example 4 Pa would mean an air pressure difference of 100 Pa when the air flow rate is a maximum would that be 5 times as high as the minimum air flow rate. This means that considerable air pressure drops will occur in such throttle valves working at low air flow rates. Accordingly, the ventilation plant will require high air pressures requiring excessive amounts of energy generating high noise levels from fans as well as valves or dampers.

EP 2 154 439 B1 discloses a gas flow regulator of a type similar to the type defined in the introduction having a restriction of the cross-section area of a channel section where a throttle valve is arranged for measuring a difference of air pressure upstream and downstream the throttle valve flap. By restricting said cross-section area in this way the operation range, i.e. the relation of maximum to minimum air flow rate, will be restricted, and the air pressure difference will increase with a square of the flow rate and generating annoying noises, especially when the core of the air flow hits the flap shaft.

DE 10 2007 019 231 B3 discloses another gas flow regulator of a type similar to the type defined in the introduction. Air pressure is measured at two positions in the region of a throttle valve flap, but the operation range and the reliability of the air pressure measurement are restricted for this regulator.

DE 20 2005 014 277 U1 discloses another gas flow regulator of a type similar to the type defined in the introduction measuring a pressure difference of air close to a throttle valve flap. This design of the measuring means results in difficulties to obtaining a pressure difference being high enough for the accuracy desired over a broader operating range of the gas flow regulator.

WO 01/75374 A1 discloses a gas flow regulator as defined in the preamble of claim 1. Such a gas flow regulator has the advantage that by arranging said two positions for gas pressure measurement directly on the flap of the throttle valve on opposite sides thereof a pressure difference sufficiently high for obtaining a reliable measurement result may be obtained over the entire operation range of the regulator, i.e. the range of the inclination angle of the throttle valve flap, without any additional pressure drops in connection with the regulator as a consequence of other restrictions of air flows than by said flap. DE 20217571 U1 describes a regulator of a similar type.

### SUMMARY OF THE INVENTION

There is of course an ongoing attempt to improve such a gas flow regulator further, and the object of the present invention is to provide a gas flow regulator of the type known defined in the introduction being improved in at least some aspect with respect to a known such regulator.

This object is according to the invention obtained by providing a gas flow regulator with the features listed in appended claim 1. Preferred embodiments are defined in the dependent claims.

Thus, the combination of the features that at least one of said openings for capturing gas has an elongated cross-section with a width along the surface of said flap exceeding a height thereof perpendicularly from a large surface of the flap by at least 50% and that at least one of the members defining a said opening is designed to define a channel-like member with a cross-section tapering as of said opening, improves the possibility of obtaining reliable gas pressure difference measurement results without causing unnecessarily high pressure drops at the location of the throttle valve. This will contribute further to the obtaining of low noise levels and a low energy consumption of a ventilating plant equipped with such a gas flow regulator.

According to an embodiment of the invention said member defining said opening at the upstream side of the flap directs this opening substantially oppositely, i.e. by deviating less than 10° from being oppositely directed, to the direction of a said gas flow hitting this flap side. Such a directing of said opening at the upstream side of the flap promotes the achievement of pressure difference values ensuring reliable measurement results.

According to another embodiment of the invention said member defining said opening at the leeside of the flap directs this opening to at least partially face in the direction a gas flow is intended to pass said flaps when the flap is in an at least partially open position. This design of said opening facilitates ob-tension of a sufficient gas pressure difference with respect to the opening at the upstream side as well as a stabile reference pressure at this leeside position.

According to another embodiment of the invention said member defining said opening at the leeside of the flap directs this opening in a direction along the flap side deviating by less than 10° from the direction of said gas flow hitting the upstream flap side and moving therealong. This direction of the opening is favourable for a stabile pressure at that location over a broad range of inclinations of said flap and by that over a broad range of gas flow rates in said channel.

According to another embodiment of the invention said shaft is located on the leeside of said flap. This results in a smooth upstream side of the flap improving the reliability of the pressure difference measurements and by that of the determination of the gas flow rate existing.

According to another embodiment of the invention the regulator comprises for each said opening a flexible tube connected to the opening at the opposite side of said flap with respect to the location of the opening for conducting gas from the opening away for sensing the pressure of said gas, and the two flexible tubes are for that sake preferably configured to be led out through walls of a said channel, so that the gas pressures may be sensed at a location outside the channel.

According to another embodiment of the invention at least one of said openings has an elongated cross-section with a width along the surface of said flap exceeding a height thereof perpendicularly from a large surface of said flap by 100-1500%, 200 - 1500%, 400 - 1500% or 700 - 1200%. According to another embodiment of the invention said members defining said openings are made by punching or pressing material of said flap out from flap material adjacent to said openings, which means that said openings may be accomplished in a simple and cost efficient way and with an optimum function.

According to another embodiment of the invention said opening located on said upstream side of the flap is located in a position on said flap with respect to said shaft moving in the downstream direction of an intended gas flow inside said channel when pivoting the flap so as to increase the opening degree thereof, and this opening is located at a distance to a border of the flap defining the downstream end thereof being < 90%, < 60%, < 40%, < 30%, 0 - 40% or 10 - 30% of the distance of this opening to the opposite border defining the upstream end of the flap when pivoted away from a totally closed position. This location of said opening is advantageous for obtaining a high difference of the gas pressure at the position thereof with respect to the position of the opening on the leeside of the flap.

According to another embodiment of the invention said opening located on said leeside of the flap is located in a position on said flap with respect to said shaft moving in the upstream direction of an intended gas flow inside said channel when pivoting the flap so as to increase the opening degree thereof, and this opening is located at a distance to a border of the flap defining the upstream end thereof being <90%, < 60%, < 40%, < 30%, 0 - 40% or 10 - 30% of the distance of this opening to the opposite border defining the downstream end of the flap when pivoted away from a totally closed position. This location of this opening results in a stabile pressure of a low level with respect to that on the upstream side of the flap over a broad range of inclinations of the flap of the throttle valve.

According to another embodiment of the invention at least one of said openings is located on a symmetry line of said flap directed along a large surface of said flap and perpendicularly to said shaft.

According to another embodiment of the invention said flap adjusting member is configured to adjust the inclination of the flap with respect to the cross-section area of said channel section to be at least 10°, 10° - 25° or 15° - 25° in the most closed position of the throttle valve.

According to another embodiment of the invention said flap has a substantially circular shape, but other shapes thereof, especially depending upon this shape of the cross-section area of a said channel in which the flap is to be arranged, are possible.

The invention also relates to a plant for ventilation of a building having at least one channel provided with a gas flow regulator according to the present invention.

An example relates to a method for regulating a gas flow in a channel according to the appended independent method claim, and the features and advantages of such a method appear clearly from the above discussion of the different embodiments of a regulator according to the present invention.

Furthermore, such a method is well suited to be carried out by use of a computer program, which may be stored on a data storing medium readable by a computer or even provided through the Internet.

Further advantages as well as advantageous features of the invention will appear from the following description.

BRIEF DESCRIPTION OF THE DRAWINGS

With reference to the appended drawings, below follows a specific description of an embodiment of the invention cited as an example.

In the drawings:

Fig 1          is a very simplified view illustrating how gas flow regulators may be arranged in a plant for ventilation of a building,

Fig 2          is a schematic view illustrating a gas flow regulator according to an embodiment of the present invention,

Fig 3 and 4          are perspective views of a flap of a throttle valve included in a gas flow regulator according to an embodiment of the present invention,

Fig 5-7          are views illustrating the gas flow regulator according to the present invention in operation conditions of a normal gas flow rate, a maximum gas flow rate and a minimum gas flow rate, respectively, through a channel in question, and

Fig 8          is a diagram of the C-factor of a throttle valve of a gas flow regulator according to the present invention versus the inclination angle of the flap of the valve.

DETAILED DESCRIPTION OF AN EMBODIMENT OF THE INVENTION

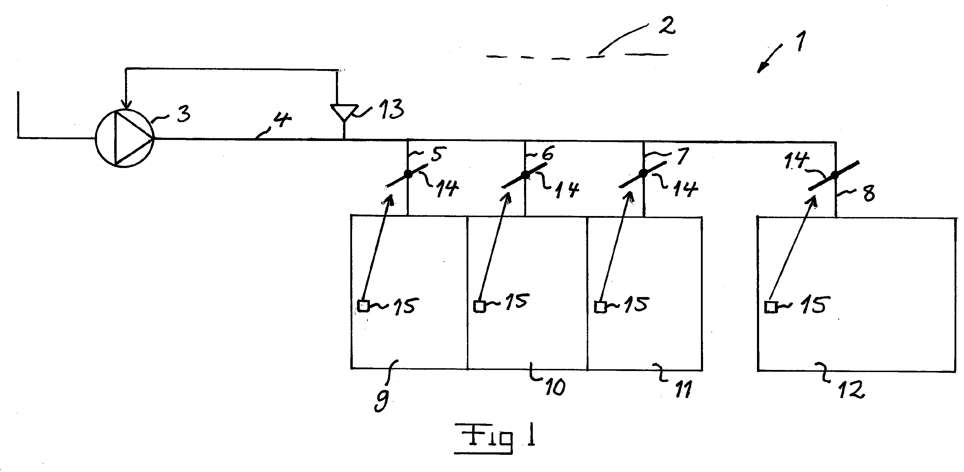

Fig 1 illustrates very schematically a possible application of a gas flow regulator according to the present invention in a plant 1 for ventilation of a building 2. It is shown how a fan 3 is arranged in a main supply air channel 4 of the building branching into air channels 5-8 to different rooms or premises 9-12 of the building. A pressure sensor 13 is arranged in the main channel 4 and provides the fan 3 with control signals. A gas flow regulator 14 according to the present invention is arranged in each channel 5-8 for regulating the air flow to the respective rooms 9-12. Furthermore, it is shown how each gas flow regulator from a member 15 receives information about a desired target value of the air flow to that room. The member 15 may include sensors of different pertinent parameters, such as the temperature in the room, presence of people therein and the $CO_2$-content in the air in that room. This means that the air flow rate target value may differ a lot from one room to the other and also for one room at different times of a day. This value may for instance be 200 l air/second to one room and 50 l air/second to another room. The ventilation plant shown in Fig 1 is very simplified and has of course among others also exhaust air channels, which are preferably also provided with gas flow regulators.

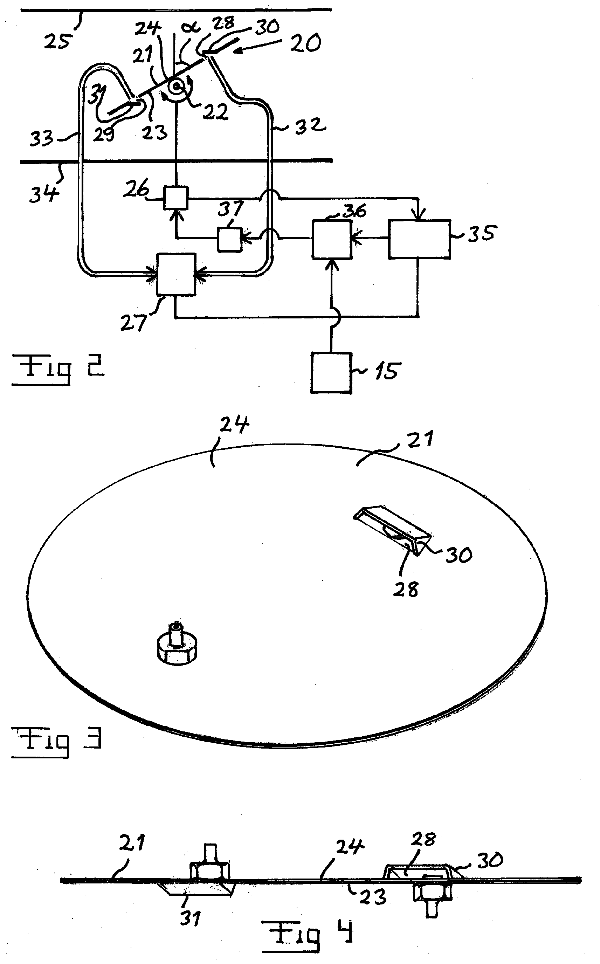

A gas flow regulator 14 suitable to be used in a ventilation plant of this type according to an embodiment of the present invention is schematically shown in Fig 2.

This gas flow regulator 14 comprises a throttle valve 20 with a flap 21 pivotably supported on a shaft 22, which is arranged on the intended leeside 23 of the flap. The throttle valve is arranged in a section of a channel 25 inside which a gas flow is to be regulated transversely to an intended gas flow direction inside the channel.

The regulator has a flap adjusting member 26 configured to adjust the opening degree of the throttle valve by adjusting the inclination $\alpha$ of the flap with respect to a cross-section area of this section of the channel 25.

The regulator has first means 27 configured to measure a gas pressure at two positions located directly on the flap 21 on opposite sides thereof. This first means has for that sake members 30, 31 defining openings 28, 29 for capturing gas, and the design and arrangement of these members appear from Fig 3 and Fig 4. The member 30 arranged on the upstream side 24 of the flap is arranged close to the downstream end of the flap with respect to a flowing direction of an intended gas flow inside said channel and directs the opening 28 substantially oppositely to the flowing direction of a gas flow hitting said flap side and moving along the surface of this flap side. The member 31 has a corresponding design as the member 30 while being arranged at the opposite end of the flap to that member on the leeside thereof and is designed to direct the opening 29 in the opposite direction to that of the opening 28.

The members 30, 31 are designed to define a channel-like member with a cross-section tapering as of said openings 28, 29 and are made by punching or pressing material of said flap out from flap material adjacent to said openings. It is shown how said openings have an elongated cross-section, here with a width along the surface of the flap being approximately 8 times the height thereof perpendicularly from a large surface of the flap. A flexible tube 32, 33 is connected to each opening 28, 29 at the opposite side of the flap with respect to the location of the opening for conducting gas from the opening away through the wall 34 of the channel 25 for sensing the pressure of the gas and by that a gas pressure difference by the member 27. The member 27 sends information about this gas pressure to second means 35 also receiving information about said inclination of the flap from the adjusting member 26 and configured to calculate the actual gas flow rate inside said channel on the basis of said gas pressure difference and inclination angle. Accordingly, the first 27 and second 35 means are included in an arrangement configured to determine the actual gas flow rate in the channel section, and this arrangement has also access to gas flow rate characteristics in the form of a so-called C-factor of said throttle valve in dependence of the inclination angle of the flap thereof, so that the calculation means 35 will know the C-factor of the throttle valve associated with the present inclination of the flap. Information about the actual gas flow rate determined by said arrangement is sent to a comparison member 36 configured to compare this value with a target value for the gas flow rate received from a member 15.

The result of this comparison is sent further to a control device 37 configured to control the adjusting member 26 to pivot said flap in response to the result of this comparison for adjusting the actual gas flow rate value to be said target value.

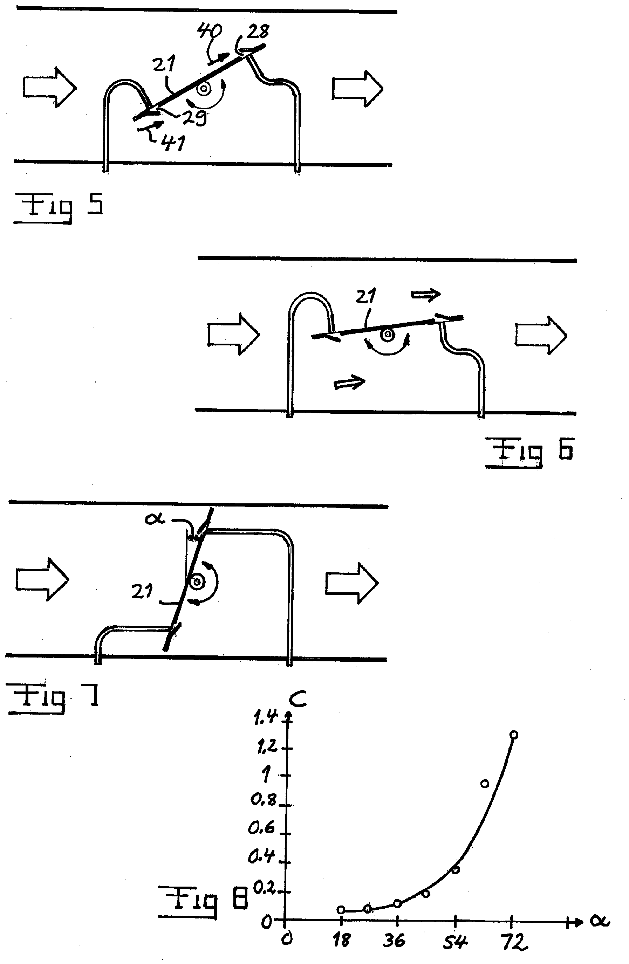

The function of the gas flow regulator according to the present invention and especially the gas pressure difference measurement will now be explained while referring to Figs 5-7 showing the gas flow regulator at different gas flow rates. The direction of the opening 28 on the upstream side 24 of the flap capturing gas flowing along the smooth (shaft 22 at the leeside) surface of the flap as shown by the arrow 40 in Fig 5 will result in a considerable pressure difference with respect to the stabile lower reference gas pressure obtained at the opening 29 by the direction of this opening substantially in the direction (arrow 41) of gas flow passing the flap 21. The two openings 28, 29 have been located so that the pressure difference will be as high as possible. Furthermore, it is noticed that the pressure drop over the channel section with such a gas flow regulator will decrease with increasing gas flow rates and be the lowest when the throttle valve is in a position for a maximum gas flow rate as shown in Fig 6, so that the pressure inside the channel will be available for components downstream the throttle valve. Considerable pressure differences for reliably determining the actual gas flow rate may be measured at normal gas flow rates, in which said inclination angle is in the region of 30 - 60° as shown in Fig 5. Such gas flows may typically be in the region of 3 m/s - 5 m/s. The higher gas flow rate prevailing in an almost open position of the throttle valve as shown in Fig 6 does also result in a gas pressure difference being sufficiently high for a reliable determination of the gas flow rate.

However, the open degree of the throttle valve should not be reduced to a smaller inclination angle than about 15°, as shown in Fig 7, since the slightest error of the measurement of the inclination angle will then result in a degraded accuracy of the determination of the gas flow rate, even if a gas pressure difference being high enough for an accurate gas flow rate determination may easily be obtained at gas flow rates being in the order of 10% of the maximum gas flow rate by this design and location of said openings.

Test measurements of said C-factor of a throttle valve having the appearance shown in the figures have been carried out. The C-factor versus the inclination angle $\alpha$ of this test is shown in Fig 8. More exactly, the values obtained are as listed in Table 1 below.

Table 1

| C- factor | Inclination (open degree) |
|-----------|---------------------------|
| 0.056 | 18° |
| 0.079 | 27° |
| 0.132 | 36° |

(continued)

| C- factor | Inclination (open degree) |
|-----------|---------------------------|
| 0.231 | 45° |
| 0.408 | 54° |
| 0.945 | 63° |
| 1.24 | 72° |

The air speed v inside said channel is obtained by the relation

$$ v = C\sqrt{\Delta p} \ (m/s) $$

in which C is the C-factor and $\Delta p$ is the pressure difference in Pa. The gas flow rate may then be obtained by multiplying the air speed with the cross-section area of the channel. Thus, knowing the C-factor of the throttle valve of the gas flow regulator enables an automatic regulation of the gas flow rate by means of electrical adjustment means with an inclination sensor and a pressure difference sensor.

The invention is of course not in any way restricted to the embodiment described above, but many possibilities to modifications thereof would be apparent to a person with ordinary skill in the art without departing from the scope of the invention as defined in the appended claims.

The different members for comparing and calculation and the control device and possibly also other parts of the gas flow regulator may of course be combined in one single apparatus, such as a micro processor.

It is of course possible to vary the positions of the members defining the openings on the flap and also the design of these members as long as it is ensured that the opening at the upstream side of the flap will receive a gas flow hitting this flap side and moving along the surface of this flap side. Accordingly, the opening defining member on the leeside may even be a pure hole in the flap, although the design of such a member similar to that shown in the figures is preferred.

"That said flap adjusting member is configured to measure the angle of said inclination of the flap" is to be interpreted broadly and to cover any type of determination of said angle associated with the adjustment of the flap inclination, even obtained by separate angle measurement means. The angle may also be only indirectly measured by measuring a parameter depending upon said angle.

**Claims**

1. A gas flow regulator comprising

   • a throttle valve (20) with a flap (21) pivotably supported on a shaft (22) arranged in a section of a channel (25) inside which a gas flow is to be regulated transversely to an intended gas flow direction inside said channel,

• a flap adjusting member (26) configured to adjust the opening degree of said throttle valve by adjusting the inclination ($\alpha$) of said flap with respect to a cross-section area of said channel section,

• an arrangement (27, 35) configured to determine the actual gas flow rate in said channel section,

• a comparison member (36) configured to compare a value of an actual gas flow rate determined by said arrangement with a target value for said gas flow rate, and

• a control device (37) configured to control said adjusting member (26) to pivot said flap in response to the result of said comparison for adjusting said actual gas flow rate value to be said target value,

said arrangement having first means (27) configured to measure a pressure difference of a gas flowing in said channel by sensing a gas pressure at two positions inside said channel and second means (35) configured to calculate said actual gas flow rate inside said channel on the basis of the value of said gas pressure difference measured, said first means being configured to measure a gas pressure at two positions located directly on said flap (21) on opposite sides thereof, one at the upstream side (24) and one at the leeside (23) of the flap, and has members (30, 31) defining openings (28, 29) for capturing gas and directing such an opening (28) at said upstream side of the flap so as to receive a gas flow hitting said flap side and moving along the surface of this flap side, said flap adjusting member (26) being configured to measure and send information about the angle of said inclination of the flap to said arrangement, said arrangement having access to gas flow rate characteristics in the form of a so-called C-factor of said throttle valve in dependence of said inclination angle ($\alpha$) of the flap thereof, and which C-factor is defined as $\dfrac{\bar{v}}{\sqrt{\Delta p}}$, with v=air speed inside said channel and $\Delta p$= difference of gas pressure at said two positions on opposite sides of said flap (21), said arrangement being configured to determine said actual gas flow rate from said pressure difference measured and said inclination angle of said flap, **characterized** in that at least one of said openings (28, 29) has an elongated cross-section with a width along the surface of said flap exceeding a height thereof perpendicularly from a large surface of said flap by at least 50%, and that at least one of said members (30, 31) defining the at least one of said openings (28, 29) is designed to define a channel-like member with a cross-section tapering as of said opening.

2. A regulator according to claim 1, **characterized** in that said cross-section width exceeds said cross-section height by 100 - 1500%, 200 - 1500%, 400 - 1500% or 700 - 1200%.

3. A regulator according to claim 1 or 2, **characterized** in that said member (30) defining said opening (28) at the upstream side of the flap directs this opening substantially oppositely, i.e. by deviating less than 10° from being oppositely directed, to the direction (40) of a said gas flow hitting this flap side (24).

4. A regulator according to any of the preceding claims, **characterized** in that said member (31) defining said opening (29) at the leeside (23) of the flap directs this opening to at least partially face in the direction (41) a gas flow is intended to pass said flap when the flap is in an at least partially open position.

5. A regulator according to claim 4, **characterized** in that said member (31) defining said opening (29) at the leeside (23) of the flap directs this opening in a direction along this flap side deviating by less than 10° from the direction (40) of said gas flow hitting the upstream flap side and moving therealong.

6. A regulator according to any of the preceding claims, **characterized** in that it comprises for each said opening (28, 29) a flexible tube (32, 33) connected to the opening at the opposite side of said flap with respect to the location of the opening for conducting gas from the opening away for sensing the pressure of said gas.

7. A regulator according to any of the preceding claims, **characterized** in that said members (30, 31) defining said openings (28, 29) are made by punching or pressing material of said flap out from flap material adjacent to said openings.

8. A regulator according to any of the preceding claims, **characterized** in that said opening (28) located on said upstream side (24) of the flap is located in a position on said flap with respect to said shaft (22) moving in the downstream direction of an intended gas flow inside said channel when pivoting the flap (21) so as to increase the opening degree thereof, and that this opening is located at a distance to a border of the flap defining the downstream end thereof being < 90%, < 60%, < 40%, < 30%, 0 - 40% or 10 - 30% of the distance of this opening to the opposite border defining the upstream end of the flap when pivoted away from a totally closed position.

**9.** A regulator according to any of the preceding claims, *characterized* **in that** said opening (29) located on said leeside (23) of the flap is located in a position on said flap with respect to said shaft (22) moving in the upstream direction of an intended gas flow inside said channel when pivoting the flap so as to increase the opening degree thereof, and that this opening is located at a distance to a border of the flap defining the upstream end thereof being < 90%, < 60%, < 40%, < 30%, 0 - 40% or 10 - 30% of the distance of this opening to the opposite border defining the downstream end of the flap when pivoted away from a totally closed position.

**10.** A regulator according to any of the preceding claims, *characterized* **in that** at least one of said openings (28, 29) is located on a symmetry line of said flap directed along a large surface of said flap and perpendicularly to said shaft (22).

**11.** A regulator according to any of the preceding claims, *characterized* **in that** said flap adjusting member (26) is configured to adjust the inclination ($\alpha$) of the flap with respect to the cross-section area of said channel section to be at least 10°, 10° - 25° or 15° - 25° in the most closed position of the throttle valve.

**12.** A plant for ventilation of a building, *characterized* **in that** at least one channel of said plant is provided with a gas flow regulator (14) according to any of claims 1-11.


**Patentansprüche**

**1.** Gasdurchflussregler mit

. einer Drosselklappe (20) mit einer Klappe (21), die schwenkbar auf einer Welle (22) abgestützt und in einem Abschnitt eines Kanals (25) angeordnet ist, in dem ein Gasdurchfluss quer zu einer vorgesehenen Gasflussrichtung innerhalb des Kanals geregelt werden soll,
. einem Klappeneinstellelement (26), das konfiguriert ist, um den Öffnungsgrad der Drosselklappe durch Einstellen der Neigung ($\alpha$) der Klappe zu einer Querschnittsfläche des Kanalabschnitts einzustellen,
. einer Anordnung (27, 35), die konfiguriert ist, um den tatsächlichen Gasdurchsatz in dem Kanalabschnitt zu bestimmen,
. einem Vergleichselement (36), das konfiguriert ist, um einen Wert eines durch die Anordnung bestimmten tatsächlichen Gasdurchsatzes mit einem Sollwert für den Gasdurchsatz zu vergleichen, und
. einer Steuervorrichtung (37), die konfiguriert ist, um das Einstellelement (26) so zu steuern, dass die Klappe als Reaktion auf das Ergebnis des Vergleichs einschwenkt, um den tatsächlichen Gasdurchflusswert auf den Sollwert einzustellen,

wobei die Anordnung erste Mittel (27) aufweist, die konfiguriert sind, um eine Druckdifferenz eines in dem Kanal fließenden Gases durch Erfassen eines Gasdrucks an zwei Positionen innerhalb des Kanals zu messen, und zweite Mittel (35), die konfiguriert sind, um den tatsächlichen Gasdurchsatz innerhalb des Kanals auf der Grundlage des Wertes der gemessenen Gasdruckdifferenz zu berechnen, wobei die ersten Mittel konfiguriert sind, um einen Gasdruck an zwei Positionen zu messen, die sich direkt auf der Klappe (21) auf entgegengesetzten Seiten derselben befinden, eine an der Anströmseite (24) und eine an der dem Durchfluss abgewandten Seite (23) der Klappe, und mit Elementen (30, 31), die Öffnungen (28, 29) zur Aufnahme von Gas definieren und eine solche Öffnung (28) zur Anströmseite der Klappe richten, um einen Gasdurchfluss aufzunehmen, der auf die Klappenseite trifft und sich entlang der Oberfläche dieser Klappenseite bewegt, wobei das Klappeneinstellelement (26) konfiguriert ist, um Informationen über den Winkel der Neigung der Klappe zu der Anordnung zu messen und zu versenden, wobei die Anordnung Zugang zu Gasdurchflusscharakteristiken in Form eines sogenannten C-Faktors der Drosselklappe in Abhängigkeit vom Neigungswinkel ($\alpha$) der Klappe derselben hat, und wobei der C-Faktor definiert ist als $\dfrac{v}{\sqrt{\Delta p}}$ mit v=Luftgeschwindigkeit im Kanal und $\Delta p$ = Differenz des Gasdrucks an den beiden Positionen auf den entgegengesetzten Seiten der Klappe (21), wobei die Anordnung konfiguriert ist, um den tatsächlichen Gasdurchsatz aus der gemessenen Druckdifferenz und dem Neigungswinkel der Klappe zu bestimmen, **dadurch gekennzeichnet, dass** mindestens eine der Öffnungen (28, 29) eine längliche Querschnittsfläche mit einer Breite entlang der Oberfläche der Klappe aufweist, die eine Höhe der Klappe senkrecht von einer großen Oberfläche der Klappe um mindestens 50 % überschreitet, und dass mindestens eines der Elemente (30, 31), die die mindestens eine der Öffnungen (28, 29) definieren, dazu bestimmt ist, ein kanalartiges Element mit einem sich ab der Öffnung verjüngenden Querschnittsfläche zu definieren.

**2.** Regler gemäß Anspruch 1, **dadurch gekennzeichnet, dass** die Querschnittsbreite die Querschnittshöhe um 100 - 1500 %, 200 - 1500 %, 400 - 1500 % oder 700 - 1200 % überschreitet.

**3.** Regler gemäß Anspruch 1 oder 2, **dadurch gekennzeichnet, dass** das die Öffnung (28) auf der Anströmseite der Klappe definierende Element (30) diese Öffnung im Wesentlichen entgegengesetzt, d. h. in einer Abweichung von weniger als 10° von der entgegengesetzten Richtung, in die Richtung (40) eines Gasdurchflusses lenkt, der auf diese Klappenseite (24) trifft.

4. Regler gemäß einem der vorhergehenden Ansprüche, **dadurch gekennzeichnet, dass** das Element (31), das die Öffnung (29) an der dem Durchfluss abgewandten Seite (23) der Klappe definiert, diese Öffnung so ausrichtet, dass sie zumindest teilweise in Richtung (41) eines Gasdurchflusses zeigt, der die Klappe durchströmen soll, wenn sich die Klappe in einer zumindest teilweise offenen Position befindet.

5. Regler gemäß Anspruch 4, **dadurch gekennzeichnet, dass** das die Öffnung (29) auf der Durchfluss abgewandten Seite (23) der Klappe definierende Element (31) diese Öffnung in eine Richtung entlang dieser Klappenseite mit einer Abweichung von weniger als 10° von der Richtung (40) des Gasdurchflusses lenkt, der auf die Anströmseite der Klappe trifft und dort sich dort entlang bewegt.

6. Regler gemäß einem der vorhergehenden Ansprüche, **dadurch gekennzeichnet, dass** er für jede der Öffnungen (28, 29) einen flexiblen Schlauch (32, 33) umfasst, der mit der Öffnung an der entgegengesetzten Seite der Klappe zur Position der Öffnung verbunden ist, um Gas aus der Öffnung wegzuführen, um den Druck des Gases zu erfassen.

7. Regler gemäß einem der vorhergehenden Ansprüche, **dadurch gekennzeichnet, dass** die die Öffnungen (28, 29) definierenden Elemente (30, 31) durch Stanzen oder Pressen von Material der Klappe aus Klappenmaterial hergestellt sind, das an die Öffnungen grenzt.

8. Regler gemäß einem der vorhergehenden Ansprüche, **dadurch gekennzeichnet, dass** die Öffnung (28), die sich auf der Anströmseite (24) der Klappe befindet, auf der Klappe in einer Position zur Welle (22) angeordnet ist, die sich in der Abströmrichtung eines beabsichtigten Gasdurchflusses innerhalb des Kanals bewegt, wenn die Klappe (21) eingeschwenkt wird, um ihren Öffnungsgrad zu erhöhen, und dass diese Öffnung in einem Abstand zu einem Rand der Klappe angeordnet ist, der das Abströmende derselben definiert, das < 90 %, < 60 %, < 40 %, < 30 %, 0 - 40% oder 10 - 30 % des Abstands dieser Öffnung zu dem entgegengesetzten Rand ist, der das Anströmende der Klappe definiert, wenn sie aus einer vollständig geschlossenen Position weggeschwenkt wird.

9. Regler gemäß einem der vorhergehenden Ansprüche, **dadurch gekennzeichnet, dass** die Öffnung (29), die sich auf der dem Durchfluss abgewandten Seite (23) der Klappe befindet, auf der Klappe in einer Position zur Welle (22) angeordnet ist, die sich in der Anströmrichtung eines beabsichtigten Gasdurchflusses innerhalb des Kanals bewegt, wenn die Klappe eingeschwenkt wird, um ihren Öffnungsgrad zu erhöhen, und dass diese Öffnung in einem Abstand zu einem Rand der Klappe angeordnet ist, der das Anströmende derselben definiert, das < 90 %, < 60 %, < 40 %, < 30 %, 0 - 40% oder 10 - 30 % des Abstands dieser Öffnung zu dem entgegengesetzten Rand ist, der das Abströmende der Klappe definiert, wenn sie aus einer vollständig geschlossenen Position weggeschwenkt wird.

10. Regler gemäß einem der vorhergehenden Ansprüche, **dadurch gekennzeichnet, dass** mindestens eine der Öffnungen (28, 29) auf einer Symmetrielinie der Klappe angeordnet ist, die entlang einer großen Oberfläche der Klappe und senkrecht zur Welle (22) ausgerichtet ist.

11. Regler gemäß einem der vorstehenden Ansprüche, **dadurch gekennzeichnet, dass** das Klappeneinstellelement (26) konfiguriert ist, um die Neigung ($\alpha$) der Klappe zur Querschnittsfläche des Kanalabschnitts so einzustellen, dass sie mindestens 10°, 10°- 25° oder 15° - 25° in der am weitesten geschlossenen Position der Drosselklappe beträgt.

12. Anlage zur Belüftung eines Gebäudes, **dadurch gekennzeichnet, dass** mindestens ein Kanal der Anlage mit einem Gasdurchflussregler (14) nach einem der Ansprüche 1-11 versehen ist.

## Revendications

1. Régulateur d'un courant de gaz, comprenant

   • un robinet (20) papillon, ayant un volet (21) monté pivotant sur un arbre (22), disposé dans un tronçon d'un conduit (25) à l'intérieur duquel un courant de gaz doit être régulé transversalement à une direction prévue d'courant du gaz à l'intérieur du conduit,
   • un élément (26) de réglage du volet, configuré pour régler le degré d'ouverture du robinet papillon, en réglant l'inclinaison ($\alpha$) du volet par rapport à une surface de section transversale du tronçon de conduit,
   • un agencement (27, 35), configuré pour déterminer le débit instantané du gaz dans le tronçon de conduit,
   • un élément (36) de comparaison, configuré pour comparer une valeur de débit instantané du gaz déterminé par l'agencement à une valeur cible du débit de gaz et

• un dispositif (37) de commande, configuré pour commander l'élément (26) de réglage, afin de faire pivoter le volet, en réaction au résultat de la comparaison, pour régler la valeur instantanée du débit de gaz à la valeur cible,

l'agencement ayant un premier moyen (27), configuré pour mesurer une différence de pression d'un courant de gaz dans le conduit, en détectant une pression du gaz en deux positions à l'intérieur du conduit, et un deuxième moyen (35) configuré pour calculer le débit instantané de gaz à l'intérieur du conduit, sur la base de la valeur de la différence de pression de gaz mesurée,

le premier moyen étant configuré pour mesurer une pression du gaz en deux positions placées directement sur le volet (21), sur ses faces opposées, une sur la face (24) en amont et une sur la face (23) en aval du volet, et a des éléments (30, 31) définissant des ouvertures (28, 29) pour recueillir du gaz et orienter une ouverture (28) de ce genre de la face en amont du volet, de manière à recevoir un courant de gaz frappant la face du volet et se déplaçant le long de la surface de cette face du volet, l'élément (26) de réglage du volet étant configuré pour mesurer et envoyer de l'information sur l'angle d'inclinaison du volet à l'agencement, l'agencement ayant accès à des caractéristiques de débit de gaz, sous la forme de ce que l'on appel un facteur C du robinet à papillon en fonction de l'angle ($\alpha$) d'inclinaison de

son volet et lequel facteur C est défini par $\frac{v}{\sqrt{\Delta p}}$,

avec v=vitesse de l'air à l'intérieur du conduit et $\Delta$p= différence de la pression du gaz aux deux positions sur des faces opposées du volet (21),

l'agencement étant configuré pour déterminer le débit instantané de gaz à partir de la différence de pression mesurée et de l'angle d'inclinaison du volet, **caractérisé en ce qu'**au moins l'une des ouvertures (28, 29) a une section transversale oblongue, ayant une largeur, suivant la surface du volet, dépassant sa hauteur perpendiculairement à une grande surface du volet d'au moins 50% et **en ce qu'**au moins l'un des éléments (30, 31), définissant la au moins une des ouvertures (28, 29), est conçu pour définir un élément analogue à un conduit ayant une section transversale conique à partir de l'ouverture.

2. Régulateur suivant la revendication 1, **caractérisé en ce que** la largeur de la section transversale dépasse la hauteur de la section transversale de 100 à 1500%, de 200 à 1500%, de 400 à 1500% ou de 700 à 1200%.

3. Régulateur suivant la revendication 1 ou 2, **carac-**
**térisé en ce que** l'élément (30) définissant l'ouverture (28) sur la face en amont du volet, oriente cette ouverture de manière sensiblement à l'opposé, c'est-à-dire en la déviant de moins de 10° à partir d'une orientation opposée, du sens (40) du courant de gaz frappant cette face (24) du volet.

4. Régulateur suivant l'une quelconque des revendications précédentes, **caractérisé en ce que** l'élément (31) définissant l'ouverture (29) sur la face (23) en aval du volet, oriente cette ouverture pour qu'elle fasse face, au moins en partie, au sens (41), dans lequel un courant de gaz est destiné à passer sur le volet, lorsque le volet est dans une position au moins partiellement ouverte.

5. Régulateur suivant la revendication 4, **caractérisé en ce que** l'élément (31), définissant l'ouverture (29), du côté (23) en aval du volet, oriente cette ouverture dans un sens suivant cette face du volet, dévié de moins de 10° du sens (40) du courant de gaz frappant la face en aval du volet et se déplaçant le long de celle-ci.

6. Régulateur suivant l'une quelconque des revendications précédentes, **caractérisé en ce qu'**il comprend, pour chaque ouverture (28, 29), un tube (32, 33) relié à l'ouverture, sur la face opposée du volet, par rapport à l'emplacement de l'ouverture pour sortir du gaz en sortant de l'ouverture, afin de détecter la pression du gaz.

7. Régulateur suivant l'une quelconque des revendications précédentes, **caractérisé en ce que** les éléments (30, 31) définissant les ouvertures (28, 29) sont faits en poinçonnant ou en pressant du matériau du volet, en dehors du matériau du volet, au voisinage des ouvertures.

8. Régulateur suivant l'une quelconque des revendications précédentes, **caractérisé en ce que** l'ouverture (28), placée sur la face (24) en amont du volet, est placée dans une position sur le volet par rapport à l'arbre (22), se déplaçant dans le sens vers l'aval d'un courant prévu de gaz à l'intérieur du conduit, lorsque le volet (21) pivote, de manière à augmenter son degré d'ouverture, et **en ce que** cette ouverture est placée à une distance d'un bord du volet en définissant l'extrémité en aval, qui est < 90%, < 60%, < 40%, < 30%, de 0 à 40% ou de 10 à 30% de la distance de cette ouverture au bord opposé définissant l'extrémité en aval du volet, lorsqu'il pivote en s'écartant d'une position fermée complètement.

9. Régulateur suivant l'une quelconque des revendications précédentes, **caractérisé en ce que** l'ouverture (29), placée sur la face (23) en aval du volet est placée dans une position sur le volet par rapport à l'arbre (22) se déplaçant dans le sens en amont d'un courant de gaz prévu à l'intérieur du conduit, lorsque le volet pivote de manière à augmenter son degré d'ouverture, et **en ce que** cette ouverture est placée à une distance d'un bord du volet définissant son extrémité en amont, qui est < 90%, < 60%, < 40%, < 30%, de 0 à 40% ou de 10 à 30% de la distance de cette ouverture au bord opposé définissant l'extrémité en aval du volet, lorsqu'il pivote en s'écartant de la position fermée complètement.

10. Régulateur suivant l'une quelconque des revendications précédentes, **caractérisé en ce qu'**au moins l'une des ouvertures (28, 29) est placée sur une ligne de symétrie du volet dirigée sur une grande surface du volet et perpendiculairement à l'arbre (22).

11. Régulateur suivant l'une quelconque des revendications précédentes, **caractérisé en ce que** l'élément (26) de réglage du volet est configuré pour régler l'inclinaison ($\alpha$) du volet par rapport à la surface de section transversale du tronçon de conduit à au moins 10°, 10° à 25° ou 15° à 25° dans la position la plus fermée du robinet à papillon.

12. Installation de ventilation d'un bâtiment, **caractérisée en ce qu'**au moins un conduit de l'installation est pourvu d'un régulateur (14) d'un courant de gaz suivant l'une quelconque des revendications 1 à 11.

Fig 1

Fig 2

Fig 3

Fig 4

Fig 5

Fig 6

Fig 7

Fig 8

**EP 2 662 637 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2154439 B1
- DE 102007019231 B3
- DE 202005014277 U1
- WO 0175374 A1
- DE 20217571 U1